# EUROPÄISCHE PATENTANMELDUNG

(11) **EP 1 284 555 A2**
(43) Veröffentlichungstag der Anmeldung: **19.02.2003**
(21) Anmeldenummer: 02102128.2
(22) Anmeldetag: 13.08.2002
(51) Int. Cl.: H04L 12/40, H04L 12/12, H04L 29/00, G06F 1/00

(54) **Vorrichtung und Verfahren zur Diebstahlsicherung von an ein Bussystem angeschlossenen elektronischen Geräten**

(30) Priorität: 14.08.2001 DE 10139922
(71) Anmelder: Philips Corporate Intellectual Property GmbH, 20099 Hamburg (DE); Koninklijke Philips Electronics N.V., 5621 BA Eindhoven (NL)
(72) Erfinder: Baumeister, Markus, 52088, Aachen (DE); Baldus, Heribert, 52088, Aachen (DE); Falck, Thomas, 52088, Aachen (DE); Hauptmann, Steffen, 52088, Aachen (DE); Kahlert, Joachim, 52088, Aachen (DE); Montvay, Andras, 52088, Aachen (DE)
(74) Vertreter: Volmer, Georg, Dipl.-Ing.

(57) **Zusammenfassung**

Die Erfindung betrifft ein Verfahren und eine Vorrichtung zur Diebstahlsicherung von an ein Bussystem angeschlossenen elektronischen Geräten. Das Verfahren ist insbesondere zur Verwendung in einem digitalen Hausnetzwerk basierend auf einem IEEE 1394 Standard geeignet. Bei dem Verfahren wird mindestens eines der im Netzwerk befindlichen Geräte mit einer Überwachungseinheit ausgestattet, welche zwischen einem aktivierten und einem deaktivierten Zustand umgsschaltet werden kann. Im aktivierten Zustand beobachtet die Überwachungseinheit, ob ein Bus-Reset auftritt, wacher insbesondere bei Entfernung eines Gerätes aus dem Netzwerk erzeugt wird. Nach Auftreten eines solchen Resets vergleicht die Überwachungseinheit die Liste aller im Bus vorhandenen Geräte mit einer vor dem Reset erzeugten und gespeicherten Liste. Bei Feststellung von Unterschieden wird ein Alarm ausgelöst, welcher insbesondere mit Hilfe der vorhandenen Geräte wie etwa Fernseher und HiFi-Anlagen wiedergegeben werden kann.

Ferner kann ein abgetrenntes Gerät durch einen Konfigurationsvergleich des früheren Bussystems mit einem neuen Bussystem, in das das Gerät eingebracht wird, einen vermutlichen Diebstahl erkennen und daraufhin eine Blockade seiner eigenen Funktionen aktivieren.

## Beschreibung

Die Erfindung betrifft ein Verfahren zur Diebstahlsicherung von an ein Bussystem angeschlossenen elektronischen Geräten, wobei bei Trennung eines Gerätes vom Bus ein Signal ausgelöst wird, aufgrund dessen die Trennung durch das abgetrennte Gerät und/oder durch mindestens ein anderes Gerät am Bussystem erkannt wird. Ferner betrifft die Erfindung eine Vorrichtung zur Durchführung des genannten Verfahrens.

Die Verarbeitung von Informationen unterliegt einer zunehmenden Digitalisierung und Vernetzung von Verarbeitungsmedien. Soweit hiervon der Wohnungsbereich betroffen ist, werden die zugehörigen Netzwerke als digitale Hausnetzwerke (IHDN: In-Home Digital Network) bezeichnet. In einem solchen IHDN können Fernsehen, Radio, Monitore, Lautsprecher, Kameras, Drucker, Scanner, PCs, Telefondienste, eine Spracherkennung, Hausgerätesteuerungen, Sicherheitseinrichtungen und dergleichen integriert sein Aufgrund des in der Regel beachtlichen Wertes der an ein IHDN angeschlossenen elektronischen Geräten unterliegen diese einer erheblichen Gefahr, unberechtigt vom Bussystem getrennt und entfernt, das heißt gestohlen zu werden. Es besteht daher ein Bedarf für eine Diebstahlsicherung von an ein Bussystem angeschlossenen Geräten.

Diesbezüglich ist aus der US 6 021 493 ein Verfahren zur Diebstahlsicherung eines nachgeordneten Computers (dient) aus einer Netzwerkverbindung mit einem Hauptcomputer bekannt, bei welchem der Hauptcomputer in regelmäßigen Abständen Anfragen an die an das Netzwerk angeschlossenen nachgeordneten Computer sendet und auf eine Antwort hierauf wartet. Sofern innerhalb einer vorgegebenen Zeitdauer keine derartige Antwort eingeht, geht der Hauptcomputer davon aus, dass der angefragte client vom Netzwerk getrennt wurde, und löst daraufhin ein Alarmsignal an den Netzwerkadministrator aus. Nachteilig bei diesem Verfahren ist, dass eine ständige Belastung des Bussystems durch die Nachfragen des Hauptcomputers und die Bestätigungsantworten der nachgeordneten Computer besteht. Sofern diese Busbelastung durch entsprechend große Zeitabstände zwischen den Nachfragen verringert wird, verzögert sich hierdurch Nachteiligerweise die Reaktionszeit für das Erkennen des Diebstahls eines Gerätes. Ein weiterer Nachteil besteht darin, dass das Verfahren zentral vom Hauptcomputer ausgeht, so dass ein missbräuchlicher Angriff auf den Hauptcomputer die gesamte Sicherung des Netzwerkes zerstören kann.

Vor diesem Hintergrund war es Aufgabe der vorliegenden Erfindung ein verbessertes und insbesondere für digitale Hausnetzwerke geeignetes Verfahren zur Diebstahlsicherung von elektronischen Geräten bereitzustellen, welches trotz geringer Busbelastung eine möglichst unverzügliche Reaktion auf einen Diebstahl gewährleistet.

Diese Aufgabe wird durch ein Verfahren mit den Merkmalen des Anspruchs 1 sowie eine Vorrichtung mit den Merkmalen des Anspruchs 10 gelöst. Vorteilhafte Ausgestaltungen sind in den Unteransprüchen enthalten.

Bei dem Verfahren zur Diebstahlsicherung von an ein Bussystem angeschlossenen elektronischen Geräten wird bei Trennung eines solchen Gerätes vom Bus ein Signal ausgelöst, aufgrund dessen die Trennung durch das abgetrennte Gerät selbst und/oder durch mindestens ein anderes Gerät am Bussystem erkannt. Nach dem Erkennen einer Trennung wird die aktuelle Konfiguration des Bussystems mit der früheren Konfiguration des Bussystems verglichen. Voraussetzung hierfür ist, dass das Bussystem so eingerichtet ist, dass die eindeutige Konfigurationsinformation für die betreffenden Geräte verfügbar bzw. erhältlich ist. Alternativ kann auch die Konfiguration desjenigen Bussystems, an welches das abgetrennte Gerät nach seiner Trennung beim nächsten Mal angeschlossen wird, mit der früheren Konfiguration des Bussystems, an welches das Gerät vor seiner Trennung angeschlossen war, verglichen werden. Sofern bei einem der genannten Vergleiche ein signifikanter Unterschied zwischen der früheren und der aktuellen Konfiguration festgestellt wird, wird eine Diebstahlreaktion ausgelöst. Das Bussystem kann sowohl auf einem logischen Bus als auch einem physikalischen Bus basieren.

Das erfindungsgemäße Verfahren hat den Vorteil, dass alle Überprüfungsschritte durch die erkannte Trennung eines Gerätes vom Bus ausgelöst werden. Es ist daher nicht erforderlich, fortwährend die weitere Ankopplung der Geräte durch Nachfragen zu überprüfen. Vielmehr wird nur in solchen Fällen, in denen aufgrund der Trennung eines Gerätes ein Diebstahl in Frage kommt, das Überwachungsverfahren ausgeführt.

Des weiteren ist von Vorteil, dass bei der Trennung eines Gerätes die gesamte frühere Konfiguration mit der gesamten aktuellen Konfiguration des Bussystems verglichen wird Unter Konfiguration des Netzwerkes ist dabei insbesondere die Anzahl und Individualität der angeschlossenen Geräte sowie gegebenenfalls die Netzwerktopologie zu verstehen. Der vollständige Vergleich der Konfigurationen hat hierbei den Vorteil, dass sämtliche Änderungen erkannt werden, auch wenn diese möglicherweise nicht das Gerät betreffen, dessen Trennung die Vergleichsroutine ausgelöst hat.

Das Auslösen von Diebstahlreaktionen kann bei dem Verfahren auf das Feststellen signifikanter Unterschiede beschränkt werden, das heißt solcher Unterschiede, die oberhalb eines vorgegebenen Schwellwertes liegen. Selbstverständlich kann dieser Schwellwert auch bei Null angesetzt werden, so dass auf jegliche Konfigurationsänderung eine Diebstahlreaktion ausgelöst wird

Gemäß einer ersten Ausgestaltung kann die Diebstahlreaktion in der Blockierung der Funktion des abgetrennten Gerätes bestehen. Wenn somit ein Gerät aus einem ersten Bussystem unberechtigterweise entfernt wird und anschließend in ein zweites Bussystem integriert werden soll, erkennt das Gerät, dass es sich vor und nach der Trennung in verschiedenen Bussystemen befindet, und blockiert daraufhin seine eigene Funktion. Das Gerät ist somit praktisch wertlos. Das Wissen um ein derartiges Verhalten eines elektronischen Gerätes macht dieses von vornherein für einen Diebstahl uninteressant und beugt damit dem Diebstahl vor.

Alternativ oder zusätzlich kann die Diebstahlreaktion auch in der Auslösung eines Alarmsignals bestehen. Ein derartiges Alarmsignal kann auf dem vom Bus getrennten Gerät oder vorzugsweise in Geräten des Bussystems, aus welchem das Gerät entfernt wurde, ausgelöst werden. Der Alarm weist autorisierte Personen auf die vermutlich unberechtigte Entfernung des Gerätes hin. Darüber hinaus kann der Alarm ggf. auch von den unbefugten Personen wahrgenommen werden und diese bei der Ausführung des Diebstahls stören.

In diesem Zusammenhang können die in einem digitalen Hausnetzwerk angeschlossenen Geräte vorteilhaft zur Wiedergabe des Alarmsignals eingesetzt werden. So können beispielsweise auf angeschlossenen TV-Geräten Lichtsignale, auf Audiogeräten Tonsignale und über Telekommunikationsgeräte Fernalarme, etwa Anrufe bei einer autorisierten Person oder bei der Polizei, ausgelöst werden. Bei den den Alarm wiedergebenden Geräten muss es sich nicht notwendigerweise um überwachende Geräte handeln, d.h. solche, welche die Trennung eines Gerätes erkennen und daraufhin einen Alarm auslösen können.

Bei dem Bussystem, welches durch das erfindungsgemäße Verfahren gegen den Diebstahl eines elektronischen Gerätes geschützt wird, kann es sich insbesondere um ein Bussystem nach den IEEE 1394 Standard handeln. Bei diesem Vorteilhafterweise für digitale Hausnetzwerke geeigneten Standard ist die Erzeugung eines Reset-Signals auf dem Bus vorgesehen, wenn ein an den Bus angeschlossenes Gerät abgetrennt wird Weiterhin wird bei diesem Standard jedes angeschlossene elektronische Gerät mit einer eindeutigen Kennung versehen, so dass sich die Konfiguration eines einmal zusammengestellten Bussystems mit Hilfe dieser Kennungen eindeutig beschreiben lässt. Ferner hat der IEEE 1394 Standard den Vorteil, ein echtes Peer-to-Peer Netzwerk zu sein, was vorliegend gegenüber hierarchischen Netzen (zB. USB) die geeignetere Topologie ist.

Bei einer speziellen Ausgestaltung des Verfahrens, die sich insbesondere in Verbindung mit dem genannten IEEE 1394 Standard eignet, wird bei Trennung eines Gerätes vom Bus ein Reset-Signal auf dem Bus ausgelöst. Nach dem Reset-Signal werden die individuellen Kennungen aller an den Bus angeschlossenen Geräte in einer Liste gesammelt und dann mit einer früheren liste verglichen, in welcher die Kennungen der vor dem Reset-Signal am Bussystem angeschlossenen Geräte eingetragen sind Wenn ein Unterschied zwischen den beiden Listen festgestellt wird, wird ein Alarmsignal ausgelöst. Das geschilderte Verfahren nutzt somit ein bei Trennung eines Gerätes unspezifisch ausgelöstes Reset-Signal dazu, eine Konfigurationsänderung des Bussystems zu detektieren und hierauf mit einem Alarm zu reagieren.

Gemäß einer Weiterbildung des zuletzt erläuterten Verfahrens wird das Alarmsignal auch dann ausgelöst, wenn der Vergleich der früheren und der aktuellen Liste innerhalb einer vorgegebenen ersten Zeitdauer nach dem ersten aufgetretenen Reset-Signal nicht abgeschlossen werden kann und/oder wenn innerhalb einer bestimmten Zeiteinheit mehr als eine vorgegebene Anzahl von Bus-Resets auftritt. Die Unfähigkeit, den Vergleich der Listen abzuschließen, kann insbesondere darauf beruhen, dass wiederholt kurz hintereinander Reset-Signale im Bussystem ausgelöst werden, so dass keine ordnungsgemäße Abarbeitung der Überwachungsfunktion möglich ist. Solche wiederholt auftretenden Reset-Signale könnten dabei missbräuchlich verursacht sein, um die Überprüfung der Konfigurationsänderung durch das Bussystem zu verhindern. Eine derartige Ausschaltung der Kontrolle wird dann durch den automatisch nach Ablauf der ersten Zeitdauer ausgelösten Alarm verhindert.

Gemäß einer anderen Weiterbildung der Erfindung wird das Alarmsignal nicht ausgelöst, wenn innerhalb einer vorgegebenen zweiten Zeitdauer nach dem ersten Reset-Signal mindestens ein weiteres Reset-Signal ausgelöst wird und die im Anschluss an dieses weitere Reset-Signal erstellte Liste der an den Bus angeschlossenen Geräte mit der früheren Liste der vor dem ersten Reset-Signal an den Bus angeschlossenen Geräte übereinstimmt. Auf diese Weise wird sichergestellt, dass eine nur kurzzeitige Trennung beziehungsweise ein kurzzeitiger Ausfall eines Gerätes, der nichts mit einem Diebstahl zu tun hat, keine Alarmfunktionen auslöst.

Vorzugsweise lässt sich das oben erläuterte Verfahren durch autorisierte Kommandos aktivieren und deaktivieren. Die Autorisierung der Kommandos kann zum Beispiel durch die Abfrage eines Passworts geschehen. Der Benutzer beziehungsweise rechtmäßige Eigentümer des Bussystems kann auf diese Weise Überwachungsfunktionen gezielt für die Zeiten einschalten, zu denen eine solche Überwachung notwendig ist. Gleichzeitig kann er durch Deaktivierung der Überwachung sicherstellen, dass er selbst Gewünschtenfalls Änderungen der Konfiguration des Bussystems vornehmen kann.

Die Erfindung betrifft weiterhin eine Vorrichtung zur Diebstahlsicherung von an ein Bussystem angeschlossenen elektronischen Geräten, welche dadurch gekennzeichnet ist, dass mindestens eines der Geräte eine an den Bus angekoppelte Überwachungseinheit enthält, welche mit einer Alarmeinrichtung und/oder einer Steuerung des Gerätes verbunden und dazu eingerichtet ist, ein Verfahren der oben erläuterten Art auszuführen Das heißt, dass die Überwachungseinrichtung insbesondere nach der Trennung eines Gerätes vom Bus einen Vergleich der Konfiguration des Bussystems vor der Trennung und nach der Trennung ausführt. Bei Feststellung eines Unterschiedes in den Konfigurationen kann sie dann über die Alarmeinrichtung einen Alarm auslösen und/oder die Gerätesteuerung ansprechen, um zum Beispiel die Blockierung der Gerätefunktionen zu verursachen. Die Überwachungseinheit kann als eigenständiges, an den Bus angeschlossenes Gerät mit der alleinigen Funktion der Überwachung ausgebildet sein. Insbesondere kann die Überwachungseinheit jedoch auch in ohnehin vorhandene Geräte wie etwa TV-Geräte, HiFi-Anlagen oder Telefone integriert sein. Von besonderem Vorteil ist es, wenn mehrere Überwachungseinheiten unabhängig voneinander am Bus angeschlossen sind, wobei sich die Überwachungseinheiten vorzugsweise in verschiedenen Räumen eines Hauses befinden. Auf diese Weise kann sichergestellt werden, dass die Überwachungsfunktion nicht durch unberechtigten Zugriff auf ein einziges Gerät ausgeschaltet werden kann.

Im Folgenden wird die Erfindung anhand eines Beispiels näher erläutert.

Betrachtet wird ein digitales Hausnetz (IHDN), in welchem verschiedene elektronische Geräte mittels eines IEEE 1394 Busses verbunden sind. Mehrere der Geräte, zum Beispiel ein Fernseher, ein Radio und ein Satellitentuner sollen dabei mit einem eingebauten erfindungsgemäßen Diebstahlschutz versehen sein. Diese Geräte werden vorzugsweise in verschiedenen Zimmern, zum Beispiel Wohnzimmer, Schlafzimmer und Abstellraum, aufgestellt. Daneben kann es noch weitere Geräte wie etwa eine HiFi-Anlage geben, die ebenfalls in das Hausnetz integriert sind, ohne jedoch einen eigenen Diebstahlschutz aufzuweisen.

Nach Installation aller Geräte des digitalen Hausnetzwerkes wird der in einigen der Geräte vorhandene Diebstahlschutz aktiviert. Dies kann zum Beispiel über einen Dialog auf dem Fernseher geschehen. Dabei kann insbesondere auch ein Passwort eingegeben werden, mit welchem sich der Diebstahlschutz wieder deaktivieren lässt, um später eine gewünschte Veränderung des Netzwerkes vorzunehmen. Nach der Aktivierung des Diebstahlschutzes löst jede Entfernung eines Gerätes aus dem Netzwerk wie unten beschrieben einen Diebstahlalarm aus

Nach der Aktivierung des Diebstahlschutzes erstellen die in den oben genannten Geräten vorhandenen Überwachungseinheiten zunächst jeweils eine komplette Liste aller Kennungen (GUIDs) der im Netzwerk befindlichen Geräte und speichern diese in einem Arbeitsspeicher ab.

Die Überwachungseinheiten halten bei aktiviertem Diebstahlschutz auch dann ihre Netzwerk-Module betriebsbereit, wenn das Gerät, in dem sie enthalten sind, in einen Standby-Modus geschaltet wird. Geräte, welche keine Überwachungseinheiten enthalten, können dagegen ihre Aktivitäten im nicht benutzten Zustand so weit verringern, dass sie nur noch eine minimale Netzwerk-Bereitschaft behalten. Diese umfasst insbesondere eine Beteiligung an Bus-Resets sowie die Abfragemöglichkeit von CSR-Informationen (Control and Status Registers, vgl. Don Anderson, "FireWire System Architecture", 1999). Abhängig von der Implementierung des jeweiligen Netzwerk-Chips kann hierzu die auf dem IEEE 1394 Bus vorhandene Versorgungsspannung bereits ausreichen.

Wenn in diesem Zustand der aktivierten Diebstahlsicherung die Entwendung eines Gerätes, etwa der oben genannten HiFi-Anlage versucht wird, so müssen zu diesem Zweck die Kabelverbindungen des Gerätes mit dem Hausnetzwerk gelöst werden. Spätestens bei der Entfernung des IEEE 1394 Kabels, gegebenenfalls jedoch auch schon bei Entfernung des Stromkabels, werden das Gerät oder die Geräte, die in der topologischen Netzstruktur der HiFi-Anlage benachbart sind, das Verschwinden ihres Nachbargerätes bemerken. Gemäß der IEEE 1394 Spezifikation wird daher von den Geräten ein Bus-Reset in dem verbleibenden Netzwerk (oder den verbleibenden Netzwerken) ausgelöst.

Alle IEEE 1394 Controller der Geräte des Netzwerkes (beziehungsweise der Netzwerke, wenn das Netz durch das Entfernen der HiFi-Anlage gespalten wurde), erfahren automatisch von dem Bus-Reset. Die Controller der Überwachungseinheiten für den Diebstahlschutz aktivieren daraufhin spezielle Überwachungsroutinen, welche gegebenenfalls auch in Hardware realisiert sein können. Nach Beendigung des Bus-Resets erstellen diese Überwachungsroutinen auf jeder Überwachungseinheit eine neue Kennungs-Liste und vergleichen diese mit der alten Liste. Unterscheiden sich diese beiden Listen, das heißt hat eine Liste mehr, weniger oder andere GUIDs, so wird die Alarmfunktion der jeweiligen Überwachungseinheit aktiviert. Gegebenenfalls kann der Alarm auch einige Sekunden verzögert werden, um Fehlalarme durch sporadisch kurzfristig vom Bus verschwindende Controller zu vermeiden. Der Alarm kann insbesondere unter Verwendung der normalerweise anderweitig verwendeten Geräte erzeugt werden. So können etwa der Fernseher oder die HiFi-Anlage störenden Lärm oder licht nach einem vorprogrammierten Muster oder durch Abspielen eines im IHDN verfügbaren Inhalts (zB. Sirenengeheul) erzeugen. Ebenso kann als Alarm auch ein automatischer Polizeianruf durch ein eingebautes Modem erfolgen.

Das geschilderte Verfahren erkennt auch den Versuch, ein wertvolles Gerät im Netzwerk gegen ein weniger wertvolles auszutauschen. Wenn etwa ein Walkman nach dem IEEE 1394 Standard gegen die HiFi-Anlage ausgetauscht wird, kann das erfindungsgemäße Verfahren dies feststellen, da jedes Gerät mit den GUIDs global eindeutige Identifikatoren aufweist.

Weiterhin könnte versucht werden, die Überwachungsfunktion dadurch lahm zu legen, dass mit Hilfe eines Bus-Reset-Generators eine rasche Folge von Bus-Resets ausgelöst wird. Da hierbei ein neuer Bus-Reset kommt, bevor der vorhergehende durch das Bussystem vollständig behandelt wurde, besteht die Gefahr, dass die Überwachungseinheiten nicht mehr in der Lage sind, die noch im Netz befindlichen Geräte zu erfragen. Diese Gefahr wird erfindungsgemäß dadurch beseitigt, dass die Überwachungseinheiten einen Grenzwert besitzen für die Anzahl der Bus-Resets, die in einer bestimmten Zeiteinheit auftreten dürfen. Dieser kann je nach Stabilität des Netzes veränderbar sein. Wenn dieser Wert überschritten wird, lösen die Überwachungseinheiten Alarm aus, so dass der mit einem Reset-Generator durchgeführte Blockierungsversuch für den Diebstahlschutz fehlgeschlagen ist.

Gemäß einer andere Ausgestaltung der Erfindung wird der Konfigurationsvergleich der Netzwerke dazu ausgenutzt, dass ein unberechtigt entferntes Gerät seine Weiterverwendung verhindert. Nach Aktivierung einer derartigen Schutzfunktion erstellt die Überwachungseinheit des entsprechenden Gerätes wiederum eine Liste aller Kennungen (GUIDs) der im Netz vorhandenen Geräte und speichert diese dauerhaft auf einen nicht flüchtigen, nicht löschbaren und nicht einfach entfernbaren Speicher. Hierbei kann es sich zum Beispiel um einen Flash RAM-Bereich auf dem IEEE 1394 Controllerchip handeln. Nach der Entfernung eines derartigen Gerätes aus dem Netzwerk und dem erneuten Anschluss in einem anderen Netzwerk erkennt das Gerät beim Einschalten, dass der Weiterverwendungsschutzmodus aktiviert ist. Der Controller erstellt daher beim Einschalten eine Liste der im Netz vorhandenen Kennungen und vergleicht diese mit der gespeicherten Liste. Weichen beide Listen um mehr als einen vorgegebenen Prozentsatz (einschließlich null Prozent) voneinander ab, so verweigert der Controller seinen Dienst. Das gestohlene Gerät wird somit effektiv wertlos und damit für einen Diebstahl von vornherein uninteressant.

Mit dem erfindungsgemäßen Verfahren wird somit ohne zusätzliche Sensoren und ohne zusätzliche Verkabelung ein Diebstahlschutz für alle an einen Bus gemäß dem IEEE 1394 Standard angeschlossenen Geräte erreicht. Dieser lässt sich besonders schwer umgehen, wenn entweder das zentrale Gerät sicher eingebaut ist oder wenn mehrere über das Haus verteilte Geräte entsprechende Überwachungseinrichtungen aufnehmen. Das erfindungsgemäße Verfahren kann durch entsprechende Ergänzungen im IEEE 1394 Controller sowie der Treiber- und Anwendungssoftware der betroffenen Geräte implementiert werden. Die Diebstahlüberwachung wird ferner explizit durch den Benutzer aktiviert und deaktiviert, etwa durch eine versteckte physikalische Einrichtung am Gerät oder durch ein per Passwort, Codezahl oder dergleichen geschütztes Anwendungsprogramm. Wenn die Überwachung ausgeschaltet ist, lassen sich die Geräte entfernen, ohne Alarm auszulösen und ohne beim Wiederanschalten den Weiterverwendungsschutz zu aktivieren.

Alle überwachenden Geräte werden vorzugsweise durch ihr eigenes Netzteil mit Strom versorgt, um einen Ausfall der Überwachung durch Trennung des Gerätes von der auf dem IEEE 1394 Standard basierenden Stromversorgung zu verhindern. Alle anderen Geräte dürfen ihr eigenes Netzteil ausschalten, solange im IEEE 1394 Netzwerk genug Strom zur Verfügung steht, um die Kommunikationsfunktionen aller Geräte zu betreiben, so dass diese sich weiterhin an Bus-Resets beteiligen und ihre CSR-Informationen auslesen können. Es ist ferner vorteilhaft, wenn die überwachenden Geräte andere Geräte im Alarmfall aktivieren können, um die Lärm- und Lichterzeugung zu erhöhen.

Die Sicherheit und die Wahrscheinlichkeit eines Fehlalarms lässt sich dadurch regeln, wie lange die Überwachungseinheiten nach einem Bus-Reset warten, der das Gerät wieder in das Netzwerk aufnimmt.

Wenn sich im Netzwerk ein Bus-Manager befindet, können die Anzahl und die lokalen Kennungen der Geräte beim Bus-Manager erfragt werden. Mittels der lokalen Kennungen kann von jedem Gerät dann seine eindeutige globale Kennung (GUID) erfragt werden. Diese GUIDs bilden die Liste der vorhandenen Geräte. Falls sich dagegen im Netz kein Bus-Manager befindet, löst ein überwachendes Gerät beim Einschalten der Überwachung nach einer zufällig gewählten Zeitdauer einen Bus-Reset aus. Bei späteren, durch Bus-Resets ausgelösten Überprüfungen der angeschlossenen Geräte ist dies nicht mehr notwendig. Alle überwachenden Geräte beobachten danach den Bus auf Self-ID Pakete. Die Anzahl dieser Pakete entspricht der Zahl der im Netz befindlichen Geräte, und die mitübermittelten IDs können benutzt werden, um wiederum die GUIDs der Geräte zu erhalten, damit die Liste gebildet werden kann.

## Patentansprüche

1. Verfahren zur Diebstahlsicherung von an ein Bussystem angeschlossenen elektronischen Geräten, wobei
- bei Trennung eines Gerätes vom Bus ein Signal ausgelöst wird, aufgrund dessen die Trennung durch das abgetrennte Gerät und/oder durch mindestens ein anderes Gerät am Bussystem erkannt wird,
- die aktuelle Konfiguration des Bussystems nach dem Erkennen der Trennung und/oder die Konfiguration desjenigen Bussystems, an welches das abgetrennte Gerät nach seiner Trennung erneut angeschlossen wird, mit der früheren Konfiguration des Bussystems vor der Trennung verglichen wird, und
- bei Feststellen eines signifikanten Unterschiedes zwischen den genannten Konfigurationen eine Diebstahlreaktion ausgelöst wird

2. Verfahren nach Anspruch 1,
**dadurch gekennzeichnet,**
**dass** die Diebstahlreaktion in der Blockierung der Funktion des Gerätes besteht.

3. Verfahren nach Anspruch 1 oder 2,
**dadurch gekennzeichnet,**
**dass** die Diebstahlreaktion in der Auslösung eines Alarmsignals besteht.

4. Verfahren nach Anspruch 3,
**dadurch gekennzeichnet,**
**dass** das Alarmsignal mit Hilfe von am Bus angeschlossenen Geräten wie insbesondere Fernsehgeräten, Audiogeräten und/oder Telekommunikationsgeräten wiedergegeben wird, die nicht notwendigerweise überwachende Geräte sein müssen.

5. Verfahren nach mindestens einem der Ansprüche 1 bis 4,
**dadurch gekennzeichnet,**
**dass** das Bussystem nach dem IEEE 1394 Standard betrieben wird.

6. Verfahren nach mindestens einem der Ansprüche 1 bis 5,
**dadurch gekennzeichnet,**
**dass** die Trennung eines Gerätes vom Bus ein Reset-Signal auf dem Bus auslöst, dass nach dem Reset-Signal die individuellen Kennungen aller an den Bus angeschlossenen Geräte in einer Liste gesammelt und mit einer früheren Liste verglichen werden, in welcher die Kennungen der vor dem Reset-Signal am Bus angeschlossenen Geräte gespeichert sind, und dass ein Alarmsignal ausgelöst wird, wenn sich die beiden Listen unterscheiden.

7. Verfahren nach Anspruch 6,
**dadurch gekennzeichnet,**
**dass** das Alarmsignal auch dann ausgelöst wird, wenn der Listenvergleich nach einer vorgegebenen ersten Zeitdauer nach dem ersten Reset-Signal nicht abgeschlossen werden konnte und/oder wenn innerhalb einer bestimmten Zeiteinheit mehr als eine vorgegebene Anzahl von Reset-Signalen auftritt.

8. Verfahren nach Anspruch 6 oder 7,
**dadurch gekennzeichnet,**
**dass** das Alarmsignal nicht ausgelöst wird, wenn innerhalb einer vorgegebenen zweiten Zeitdauer nach dem ersten Reset-Signal mindestens ein weiteres Reset-Signal ausgelöst wird, und wenn die im Anschluss hieran erstellte Liste der an den Bus angeschlossenen Geräte mit der früheren Liste übereinstimmt.

9. Verfahren nach mindestens einem der Ansprüche 1 bis 8,
**dadurch gekennzeichnet,**
**dass** das Verfahren durch autorisierte Kommandos aktiviert und deaktiviert werden kann

10. Vorrichtung zur Diebstahlsicherung von an ein Bussystem, angeschlossenen elektronischen Geräten,
**dadurch gekennzeichnet,**
**dass** mindestens eines der Geräte eine an den Bus angekoppelte Überwachungseinheit enthält, welche mit einer Alarmeinrichtung und/oder einer Gerätesteuerung verbunden und dazu eingerichtet ist, ein Verfahren nach mindestens einem der Ansprüche 1 bis 9 auszuführen.
